(19) Europäisches Patentamt
European Patent Office
Office européen des brevets

(11) **EP 2 478 607 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(21) Anmeldenummer: **09783012.9**

(22) Anmeldetag: **15.09.2009**

(51) Int Cl.:
***H02J 3/24*** *(2006.01)*

(86) Internationale Anmeldenummer:
**PCT/EP2009/061919**

(87) Internationale Veröffentlichungsnummer:
**WO 2011/032579 (24.03.2011 Gazette 2011/12)**

(54) **ÜBERWACHUNG EINES ELEKTRISCHEN ENERGIEVERSORGUNGSNETZES**

MONITORING OF AN ELECTRICAL ENERGY SUPPLY NETWORK

SURVEILLANCE D'UN RÉSEAU D'ALIMENTATION EN ÉNERGIE ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**25.07.2012 Patentblatt 2012/30**

(73) Patentinhaber: **Siemens Aktiengesellschaft 80333 München (DE)**

(72) Erfinder: **LITZINGER, Andreas 90765 Fürth (DE)**

(56) Entgegenhaltungen:
**EP-A1- 1 737 098        WO-A1-01/24343
WO-A1-01/93401        WO-A2-03/001645
US-A1- 2005 256 922**

**Beschreibung**

Die Erfindung betrifft ein Verfahren zum Überwachen eines elektrischen Energieversorgungsnetzes, bei dem an mindestens zwei Messstellen in dem Energieversorgungsnetz einen Zustand des elektrischen Energieversorgungsnetzes charakterisierende Messwerte erfasst werden und jedem Messwert ein den Zeitpunkt seiner Erfassung angebender Zeitstempel zugeordnet wird.

Die Erfindung betrifft ferner ein entsprechendes Überwachungssystem und eine Leitstelleneinrichtung zur Verwendung in einem solchen Überwachungssystem.

Um einen reibungslosen und sicheren Betrieb elektrischer Energieversorgungsnetze zu gewährleisten, werden in sogenannten Netzleitstellen für den Netzzustand charakteristische Messwerte des elektrischen Energieversorgungsnetzes überwacht, um zu ermitteln, ob sich das Energieversorgungsnetz in seinem bestimmungsgemäßen Betriebszustand oder aber einem kritischen Zustand befindet. Hierzu werden an ausgewählten Messstellen des elektrischen Energieversorgungsnetzes Messwerte elektrischer Messgrößen, wie z.B. Strom, Spannung, Leistung und Frequenz, mittels geeigneter Wandler erfasst und üblicherweise in digitaler Form der Netzleitstelle zur Auswertung und Beobachtung zugeführt. Um einen zeitlichen Bezug der einzelnen Messwerte zueinander zu gewährleisten, werden die aufgenommenen Messwerte üblicherweise um sogenannte Zeitstempel, also Uhrzeitinformationsdaten, ergänzt, die z.B. diejenige Uhrzeit angeben, zu denen die Messwerte erfasst worden sind. Solche Zeitstempel können beispielsweise mit einer Genauigkeit von einer Millisekunde vergeben werden.

Mit steigender Anzahl von Messstellen und kürzeren Abtastintervallen bei der Erfassung der Messwerte steigt die Anzahl der von dem Bedienpersonal in Netzleitstellen zu überwachenden Messwerte in den letzten Jahren rapide an und wird voraussichtlich in der Zukunft noch eine weitere Steigerung erfahren.

Insbesondere beim Ausbau von Energieversorgungsnetzen zu sogenannten "Smart Grids" fallen Messwerte in einer Anzahl an, die die Messwertanzahl von herkömmlichen Überwachungssystemen für Energieversorgungsnetze um Größenordnungen übersteigt. Hierbei werden Messwerte beispielsweise mit sogenannten Phasor-Messeinrichtungen bzw. Phasor Measurement Units (PMU) als komplexe Strom- oder Spannungszeiger erfasst, die eine Aussage über Amplitude und Phasenwinkel der an der jeweiligen Messstelle des elektrischen Energieversorgungsnetzes zu messenden Messgröße umfassen. Solche Zeigermesswerte werden mit hohen Abtastraten erfasst, um z.B. Lastflüsse und mögliche Netzpendelungen noch genauer erkennen zu können und ggf. geeignete Gegenmaßnahmen zur Abwendung sich ankündigender instabiler Zustände einzuleiten.

Wie bereits erwähnt, besteht eine große Schwierigkeit für das Bedienpersonal in einer Netzleitstelle darin, bei der großen Vielzahl an zu überblickenden Messstellen und zugehörigen Messwerten eine fundierte Aussage über die aktuelle Stabilität des elektrischen Energieversorgungsnetzes angeben zu können.

Der Erfindung liegt daher die Aufgabe zugrunde, ein Verfahren zum Überwachen eines elektrischen Energieversorgungsnetzes anzugeben, bei dem insbesondere bei einer großen Anzahl von zu überwachenden Messstellen des elektrischen Energieversorgungsnetzes in einfacher Weise eine Aussage über die Stabilität des gesamten elektrischen Energieversorgungsnetzes gegeben werden kann.

Zur Lösung dieser Aufgabe wird das Verfahren nach Anspruch 1 vorgeschlage.

Bei dem erfindungsgemäßen Verfahren werden also zunächst die Messwerte jeder Messstelle in geeigneter Weise derart weiterverarbeitet, dass sie miteinander vergleichbar sind. Hierfür wird einerseits eine Normierung mit einem entsprechenden Referenzwert durchgeführt, andererseits wird durch die Differenzbildung mit einem entsprechenden normierten Schwellenwert sozusagen der Abstand jeder einzelnen Messgröße von einem kritischen Zustand des Energieversorgungsnetzes an der jeweiligen Messstelle ermittelt. Nach dieser vorbereitenden Weiterverarbeitung der Messwerte werden in vorteilhafter Weise alle Messwerte, die mit übereinstimmenden Zeitstempeln versehen sind, also zum gleichen Zeitpunkt mit unterschiedlichen Messeinrichtungen in dem Energieversorgungsnetz aufgenommen worden sind, einer statistischen Auswertung unterzogen, aus deren Ergebnis ein Verlauf einer Statusfunktion abgeleitet wird, anhand der das Bedienpersonal einer Netzleitstelle in vorteilhafter Weise einen einfachen Überblick über die Stabilität des gesamten elektrischen Energieversorgungsnetzes gewinnen kann.

Ein weiterer Vorteil des erfindungsgemäßen Verfahrens besteht darin, dass durch die gewählte Art der Vorverarbeitung der einzelnen Messwerte nicht nur Messwerte derselben Messgröße, also beispielsweise nur Spannungsmesswerte oder nur Strommesswerte, zueinander in Bezug gesetzt werden können; es können sogar Messwerte unterschiedlicher Messgrößen zur Bildung der Statusfunktion verwendet werden. Hierdurch kann zur Bildung der Statusfunktion eine vergleichsweise große Datenbasis verwendet werden, die eine gesicherte Aussage über den Gesamtzustand des elektrischen Energieversorgungsnetzes erlaubt.

Das erfindungsgemäße Verfahren sieht vor, dass als statistische Auswertung eine Minimumsfunktion durchgeführt wird, die als Ergebnis den kleinsten Wert der normierten Differenzwerte abgibt.

Durch Verwendung einer solchen statistischen Auswertung lässt sich sozusagen die lokale Stabilität des elektrischen Energieversorgungsnetzes erkennen, da durch Auswahl des kleinsten normierten Differenzwertes immer genau derjenige Messwert in die Bildung der Statusfunktion eingeht, dessen Zustand am kritischsten ist.

Alternativ oder zusätzlich dazu ist vorgesehen, dass als statistische Auswertung eine Mittelwertfunktion durchgeführt wird, die als Ergebnis den Mittelwert der normierten Differenzwerte abgibt.

Auf diese Weise lässt sich sozusagen die globale Stabilität des Energieversorgungsnetzes mit der Statusfunktion abbilden, da die Statusfunktion einen über alle Messstellen gemittelten Zustand des elektrischen Energieversorgungsnetzes angibt. Besonders vorteilhaft ist es, wenn in der Leitstelleneinrichtung Statuskurven für beide beschriebene statistische Auswertungen ermittelt und angezeigt werden, so dass sowohl der lokale als auch der globale Zustand des elektrischen Energieversorgungsnetzes durch das Bedienpersonal der Leitstelle im Auge behalten werden kann.

Eine weitere vorteilhafte Ausführungsform des erfindungsgemäßen Verfahrens sieht vor, dass die Messwerte an den Messstellen mit Phasor-Messgeräten erfasst werden.

Wie bereits eingangs erwähnt, werden mit solchen Phasor-Messgeräten oder Phasor Measurement Units (PMU) große Mengen von Messwerten erfasst und an die Netzleitstelle weitergegeben, so dass durch Einsetzen des erfindungsgemäßen Verfahrens in diesem Zusammenhang ein besonders großer Vorteil durch die verbesserte Übersicht für das Bedienpersonal des elektrischen Energieversorgungsnetzes gegeben ist.

In dem Zusammenhang kann ferner vorgesehen sein, dass die Messwerte Stromzeigermesswerte, Spannungszeigermesswerte oder davon abgeleitete Messwerte sind.

Eine weitere vorteilhafte Ausführungsform des erfindungsgemäßen Verfahrens sieht vor, dass der Verlauf der Statusfunktion überwacht und ein Alarmsignal ausgegeben wird, wenn der Verlauf den Wert Eins überschreitet.

Hierdurch kann das Bedienpersonal automatisch alarmiert werden, wenn die Statuskurve den Wert Eins überschreitet, da in diesem Fall auf einen kritischen Zustand an zumindest einer Messstelle in dem elektrischen Energieversorgungsnetz geschlossen werden kann.

Eine weitere vorteilhafte Ausführungsform des erfindungsgemäßen Verfahrens sieht vor, dass der Verlauf der Statusfunktion überwacht wird und ein Warnsignal ausgegeben wird, wenn sich der Verlauf dem Wert Eins annähert.

Auf diese Weise kann das Bedienpersonal vorausschauend gewarnt werden, wenn sich der Verlauf der Statusfunktion dem Wert Eins annähert. Hierzu kann beispielsweise ein Warn-Schwellenwert mit dem Wert 0,9 gewählt werden, bei dessen Überschreiten das Warnsignal abgegeben wird. Die Wahl des Warn-Schwellenwertes kann beliebig erfolgen und vom Betreiber des elektrischen Energieversorgungsnetzes für den jeweiligen Einsatzzweck angepasst werden.

Üblicherweise sind die Lastflüsse in einem elektrischen Energieversorgungsnetz über die Zeit nicht konstant, sondern schwanken z.B. je nach Tageszeit, Wochentag und Jahreszeit in erheblichem Maße. So gibt es Zeiten, zu denen eine sehr starke Auslastung des elektrischen Energieversorgungsnetzes vorliegt, da zu diesen Zeiten besonders viele elektrische Verbraucher in Betrieb genommen werden. Zu solchen Spitzenlastzeiten bedeutet ein Annähern der jeweiligen Messwerte an ihren zugehörigen Grenzwert noch nicht unbedingt, dass das Netz in naher Zukunft in einen kritischen Zustandes übergehen wird.

Daher wird gemäß einer weiteren vorteilhaften Ausführungsform des erfindungsgemäßen Verfahrens vorgeschlagen, dass für die mindestens zwei Messstellen auch Vorhersage-Messwerte gebildet werden, die den erwarteten zukünftigen Verlauf der Messwerte an der jeweiligen Messstelle angeben. Aus den jeweiligen Vorhersage-Messwerten und den zu den entsprechenden Messwerten zugehörenden Schwellenwerten werden durch Bezug auf die entsprechenden Referenzwerte normierte Vorhersage-Messwerte, normierte Schwellenwerte und durch Differenzbildung der normierten Schwellenwerte mit den normierten Vorhersage-Messwerten normierte Vorhersage-Differenzwerte gebildet. Die normierten Vorhersage-Differenzwerte mit übereinstimmendem Zeitstempel werden derselben statistischen Auswertung unterzogen wie die normierten Differenzwerte. Schließlich werden eine Vorhersage-Statusfunktion durch Differenzbildung aus dem Wert Eins und dem Ergebnis der statistischen Auswertung für einen jeweiligen Zeitpunkt gebildet und der zeitliche Verlauf der Vorhersage-Statusfunktion in der Leitstelleneinrichtung zusätzlich zu dem Verlauf der Statusfunktion angezeigt.

Der besondere Vorteil dieser Ausführungsform besteht darin, dass durch die Bildung einer Vorhersage-Statusfunktion der erwartete zukünftige Verlauf der jeweiligen Messwerte an den jeweiligen Messstellen angegeben wird, so dass das Bedienpersonal einer Netzleitstelle durch Vergleich der tatsächlichen Statusfunktion und der Vorhersage-Statusfunktion darauf schließen kann, ob ein unkritisches - weil erwartetes - Ansteigen der tatsächlichen Statusfunktion vorliegt oder ob die Statusfunktion unerwartet hohe Werte einnimmt.

In diesem Zusammenhang kann beispielsweise vorgesehen sein, dass die Vorhersage-Messwerte mittels eines durch vergangene Verläufe der Messwerte angelernten neuronalen Netzes bestimmt werden.

Neuronale Netze werden in der Lastflussvorhersage bereits eingesetzt und liefern belastbare Ergebnisse. Solche Lastflussvorhersageverfahren sind beispielsweise aus der Europäischen Patentschrift EP 1478075 B1 bekannt.

Alternativ dazu kann vorgesehen sein, dass mit einer Lastfluss-Vorhersage, die die zukünftig erwarteten Lastflüsse in dem Energieversorgungsnetz angibt, anhand eines Modellabbildes des Energieversorgungsnetzes eine Simulation des Verhaltens des Energieversorgungsnetzes durchgeführt wird, aus der Simulation die für die jeweiligen Messstellen entsprechend der erwarteten Lastflüsse gültigen Messwerte abgeleitet werden, und die abgeleiteten Messwerte als Vorhersage-Messwerte verwendet werden.

In diesem Zusammenhang kann zur weiteren Erhöhung der Genauigkeit der berechneten Vorhersage-Messwerte zudem vorgesehen sein, dass in die Simulation des Verhaltens des elektrischen Energieversorgungsnetzes auch ein Kraftwerks-Einsatzplan einbezogen wird, der die Regelung von Energieerzeugungseinheiten des elektrischen Energieversorgungsnetzes für einen zukünftigen Zeitraum auf Basis der Lastfluss-Vorhersage angibt. Alternativ zu den beiden vorangehend erwähnten Verfahren zur Bildung von Vorhersage-Messwerten kann auch vorgesehen sein, dass erwartete Umgebungsparameter bestimmt werden, die zumindest eine Information über für einen zukünftigen Zeitraum erwartete Wetterbedingungen enthalten, aus einer Datenbank mit archivierten Verläufen einer Statusfunktion derjenige Verlauf ausgewählt wird, dessen zugeordnete Umgebungsparameter am weitesten mit den erwarteten Umgebungsparametern übereinstimmen, und die zu dem ausgewählten Verlauf der Statusfunktion gehörenden Messwerte als Vorhersage-Messwerte verwendet werden.

Eine weitere vorteilhafte Ausführungsform des erfindungsgemäßen Verfahren sieht vor, dass der aktuelle Wert der Statusfunktion mit dem für den aktuellen Zeitpunkt vorhergesagten Wert der Vorhersage-Statusfunktion durch Differenzbildung verglichen wird und ein zweites Warnsignal erzeugt wird, wenn der Betrag der Differenz einen vorgegebenen Schwellenwert überschreitet. Auf diese Weise wird das Bedienpersonal der Netzleitstelle automatisch gewarnt, wenn der tatsächliche Verlauf der Statusfunktion von seinem erwarteten Verlauf deutlich abweicht.

Die oben genannte Aufgabe wird auch durch ein Überwachungssystem für ein elektrisches Energieversorgungsnetz gelöst, das Messeinrichtungen zur Erfassung von den Zustand des elektrischen Energieversorgungsnetzes angebenden Messwerten an zumindest zwei Messstellen des Energieversorgungsnetzes und eine Leitstelleneinrichtung, die mit den Messeinrichtungen zur Übertragung der Messwerte in Kommunikationsverbindung steht, aufweist, wobei das Überwachungssystem dazu eingerichtet ist, zur Überwachung des Energieversorgungsnetzes ein Verfahren gemäß einer der voranstehend beschriebenen Ausführungen durchzuführen.

Außerdem wird die Aufgabe durch eine Leitstelleneinrichtung gelöst, die zur Überwachung eines elektrischen Energieversorgungsnetzes in einem entsprechend ausgebildeten Überwachungssystem ausgebildet ist.

Die Erfindung soll im Folgenden anhand von Ausführungsbeispielen näher erläutert werden. Hierzu zeigen

Figur 1 eine schematische Übersicht eines Überwachungssystems für ein elektrisches Energieversorgungsnetz,

Figur 2 ein schematische Verfahrensfließbild zur Erläuterung eines Ablaufs zur Überwachung eines elektrischen Energieversorgungsnetzes,

Figur 3 ein erstes Ausführungsbeispiel der Anzeige einer Statusfunktion in einer Leitstelleneinrichtung,

Figur 4 ein zweites Ausführungsbeispiel der Anzeige einer Statusfunktion in einer Leitstelleneinrichtung und

Figur 5 ein drittes Ausführungsbeispiel der Anzeige einer Statusfunktion in einer Leitstelleneinrichtung.

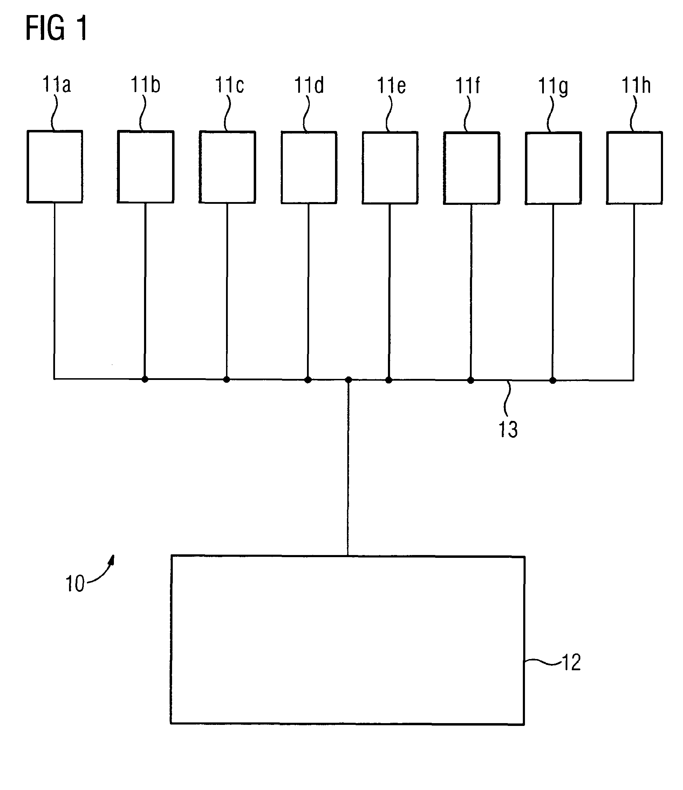

Figur 1 zeigt ein Überwachungssystem 10 für ein der Übersichtlichkeit halber selbst nicht dargestelltes elektrisches Energieversorgungsnetz. An unterschiedlichen Messstellen des elektrischen Energieversorgungsnetzes sind hierbei Messeinrichtungen 11a bis 11h angeordnet, mit denen einen Zustand des elektrischen Energieversorgungsnetzes an der jeweiligen Messstelle charakterisierende Messwerte aufgenommen werden können. Hierbei muss jedoch nicht zwingend jede Messeinrichtung an einer anderen Messstelle des elektrischen Energieversorgungsnetzes angeordnet sein; vielmehr ist es auch möglich, dass zwei Messeinrichtungen, beispielsweise die Messeinrichtungen 11a und 11b, an derselben Messstelle angeordnet sind und dort unterschiedliche Messgrößen, beispielsweise einerseits den Strom und andererseits die Spannung, erfassen und entsprechende Messwerte abgeben. Andere mit den Messeinrichtungen erfassbare für den Status des Energieversorgungsnetzes charakteristische Messgrößen können beispielsweise eine Leistung, eine Frequenz oder eine Temperatur sein.

Üblicherweise nehmen die Messeinrichtungen 11a bis 11h bereits eine Vorverarbeitung der Messwerte vor, indem beispielsweise eine Filterung und eine Analog-Digital-Umsetzung der Messwerte erfolgt. Bei einer solchen Analog-Digital-Umsetzung wird den entsprechenden digitalisierten Messwerten auch ein digitaler Zeitstempel zugeordnet, also eine Information, die eine für den einzelnen Messwert charakteristische Uhrzeit angibt (beispielsweise die Uhrzeit des Erfassungszeitpunkts des jeweiligen Messwertes).

Bei den Messeinrichtungen 11a bis 11h kann es sich z. B. um sogenannte Remote Terminal Units (RTUs) handeln. Es kann sich aber beispielsweise auch um Phasor-Messeinrichtungen bzw. Phasor Measurement Units (PMU) handeln, die zur Erfassung von Zeigergrößen in elektrischen Energieversorgungsnetzen eingerichtet sind. Beispielsweise können mit Phasor-Messeinrichtungen mit hoher Abtastrate Stromzeigermesswerte und Spannungszeigermesswerte gemessen werden, die eine Information über Amplitude und Phasenwinkel des Stromes bzw. der Spannung zu dem jeweiligen Erfassungszeitpunkt beinhalten.

Die Anzahl der Messeinrichtungen ist selbstverständlich nicht, wie in Figur 1 lediglich beispielhaft dargestellt, auf acht beschränkt, vielmehr eignet sich das im Folgenden beschriebene Verfahren zur Überwachung eines elektrischen Energieversorgungsnetzes bei beliebig großen Anzahlen von Messeinrichtungen, wobei die Vorteile des beschriebenen Verfahrens insbesondere bei hohen Anzahlen von Messeinrichtungen in den Vordergrund treten.

Die Messeinrichtungen 11a bis 11h sind über ein Kommunikationsnetzwerk, beispielsweise einen Kommunikationsbus 13, mit einer Leitstelleneinrichtung 12 verbunden, bei der es sich beispielsweise um eine speziell eingerichtete Datenverarbeitungseinrichtung in einer Netzleitstelle zur Überwachung des elektrischen Energieversorgungsnetzes handeln kann.

Der Kommunikationsbus 13 kann, wie in Figur 1 dargestellt, zur direkten Verbindung der Messeinrichtungen 11a bis 11h mit der Leitstelleneinrichtung 12 eingerichtet sein. Es ist jedoch im Rahmen der Erfindung durchaus auch möglich, einen Kommunikationsbus mit mehreren Ebenen und dazwischen geschalteten kommunikationsfähigen Geräten zu verwenden. Bei solchen kommunikationsfähigen Geräten kann es sich beispielsweise um elektrischen Schutz- oder Leitgeräte in einer Unterstation des Energieversorgungsnetzes, um bestimmte Erfassungsgeräte zur Erfassung und Weiterleitung von Messwerten, beispielsweise sogenannte "Merging Units" oder spezielle Kommunikationsgeräte wie z.B. Switches oder Hubs in einem Datenkommunikationsnetz handeln.

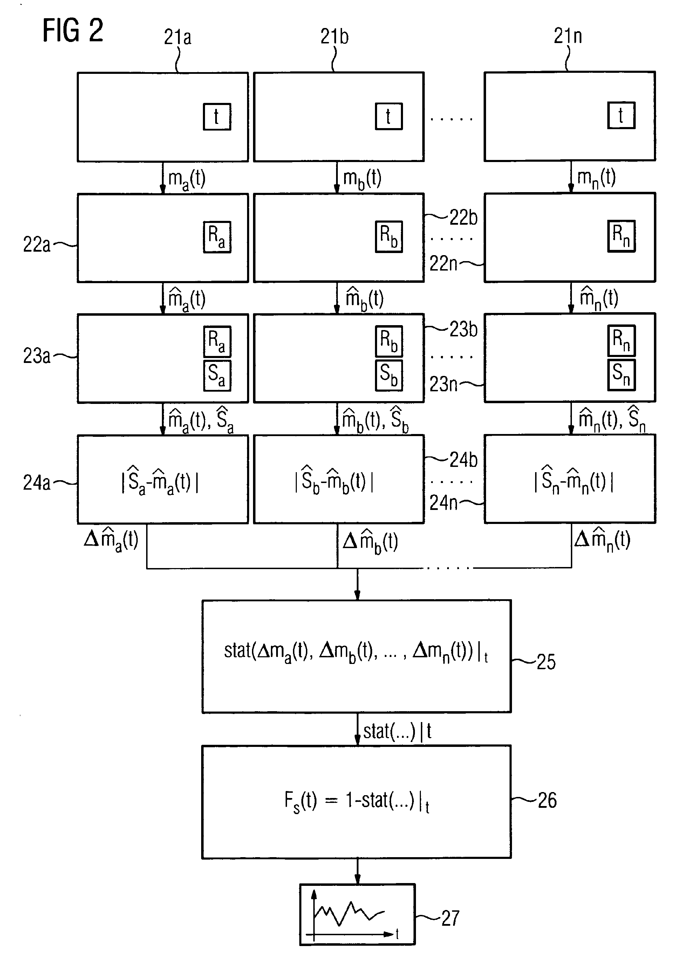

Anhand von Figur 2 soll im Folgenden ein Verfahren zur Überwachung eines elektrischen Energieversorgungsnetzes erläutert werden: In einem ersten Schritt 21a wird zunächst mit einer Messeinrichtung, beispielsweise der Messeinrichtung 11a (vgl. Figur 1), an einer Messstelle des elektrischen Energieversorgungsnetzes durch Abtastung einer Messgröße, beispielsweise eines elektrischen Stromes, eine Folge von Messwerten erfasst, denen ein ihren jeweiligen Erfassungszeitpunkt angebender Zeitstempel t zugeordnet wird. Als Ergebnis dieses Schrittes 21a werden zeitgestempelte Messwerte $m_a(t)$ abgegeben, wobei der Index a die jeweilige Messeinrichtung kennzeichnet. Bei bekannter Topologie, d. h. geografischer Anordnung, der Komponenten in dem elektrischen Energieversorgungsnetz kann jeder Messeinrichtung und damit jedem Messwert, beispielsweise dem Messwert $m_a(t)$, die entsprechende Messstelle in dem elektrischen Energieversorgungsnetz zugeordnet werden.

In einem zweiten Schritt 22a wird aus dem Messwert $m_a(t)$ ein normierter Messwert $\hat{m}_a(t)$ gebildet, indem der Quotient aus dem Messewert $m_a(t)$ und einem Referenzwert $R_a$ gebildet wird:

$$\hat{m}_a(t) = \frac{m_a(t)}{R_a}.$$

Bei dem Referenzwert $R_a$ kann es sich um einen beliebigen geeigneten Referenzwert für den Messwert $m_a(t)$ handeln, beispielsweise kann als Referenzwert $R_a$ ein Auslegungswert des elektrischen Energieversorgungsnetzes an der entsprechenden Messstelle gewählt werden. Für den beispielhaften Fall, dass es sich bei der durch den Messwert $m_a(t)$ dargestellten Messgröße um einen elektrischen Strom handelt, könnte somit der Referenzwert $R_a$ den Nennstrom des elektrischen Energieversorgungsnetzes an der entsprechenden Messstelle wiedergeben. Für die Messwerte einer Messeinrichtung kann ein konstanter Referenzwert festgelegt und verwendet werden. Alternativ kann der Referenzwert aber auch in Abhängigkeit eines weiteren Parameters, z.B. der Außentemperatur oder der Jahreszeit, dynamisch festgelegt werden.

Der normierte Messwert $\hat{m}_a(t)$ wird als Eingangswert für einen folgenden Verarbeitungsschritt 23a verwendet, in dem für die jeweilige Folge von Messwerten zumindest ein geeigneter Schwellenwert $S_a$ angegeben wird, der einen Wert der jeweiligen Messgröße angibt, bei dessen Über- oder Unterschreiten ein kritischer Zustand des elektrischen Energieversorgungsnetzes an der jeweiligen Messstelle auftritt. Für den beispielhaften Fall, dass mit den Messwerten $m_a(t)$ als Messgröße ein elektrischer Strom erfasst wird, so kann durch den Schwellenwert $S_a$ beispielsweise eine obere Stromschwelle angegeben werden, die einen kritischen Stromfluss in dem elektrischen Energieversorgungsnetz anzeigt. Beispielsweise kann der Schwellenwert $S_a$ hierzu bei 150% des Nennstromes an der entsprechenden Messstelle liegen. Bei dem Schwellenwert $S_a$ kann es sich aber auch um einen unteren Schwellenwert handeln, der beispielsweise eine untere Spannungsschwelle angibt. Außerdem können für jeden Messwert $m_a(t)$ auch mehrere Schwellenwerte $S_a$ (z.B. eine obere und eine untere Schwelle) angegeben sein, wenn sich der Messwert im Normalbetrieb in einem Bereich zwischen den Schwellenwerten $S_a$ befinden soll und ein Überschreiten der oberen Schwelle sowie ein Unterschreiten der unteren Schwelle einen kritischen Zustand des Energieversorgungsnetzes an der jeweiligen Messstelle bedeuten würde.

Aus dem Schwellenwert $S_a$ wird durch Quotientenbildung mit demselben Referenzwert $R_a$, auf den auch der jeweilige Messwert $m_a(t)$ bezogen worden ist, ein entsprechender normierter Schwellenwert $\hat{S}_a$ gebildet:

$$\hat{S}_a = \frac{S_a}{R_a}$$

Der normierte Schwellenwert $\hat{S}_a$ wird gemeinsam mit dem normierten Messwert $\hat{m}_a(t)$ dem folgenden Schritt 24a als Eingang zugeführt.

Im Schritt 24a findet eine Differenzbildung statt, bei der der Betrag der Differenz aus dem jeweiligen normierten Schwellenwert $\hat{S}_a$ und dem normierten Messwert $\hat{m}_a(t)$ gebildet wird:

$$\Delta\hat{m}_a(t) = \left| \hat{S}_a - \hat{m}_a(t) \right|.$$

Die solchermaßen erzeugten normierten Differenzwerte $\Delta\hat{m}_a(t)$ werden von Schritt 24a als Ausgangswert bereitgestellt. Für den Fall, dass im Schritt 23a mehrere Schwellenwerte $S_a$ bereitgestellt worden sind, um einen Bereich anzugeben, innerhalb dessen der Messwert $m_a(t)$ im Normalbetrieb liegen muss, werden im Schritt 24a entsprechend mehrere Resultate erzeugt. Als normierter Differenzwert $\Delta\hat{m}_a(t)$ wird aber nur der kleinste Wert der gebildeten Differenzen weiter verwendet, da dieser sozusagen den "kritischsten Zustand" des Messwertes $m_a(t)$ wiederspiegelt.

Entsprechend der soeben für die Schritte 21a bis 24a dargestellten Vorgehensweise zur Vorverarbeitung der Messwerte $m_a(t)$ wird für jede Messeinrichtung eine entsprechende Folge von normierten Differenzwerten durch Ausführung entsprechender Verfahrensschritte gebildet.

So wird beispielsweise mit der Messeinrichtung 11b (vgl. Figur 1) im Schritt 21b eine Folge von zeitgestempelten Messwerten $m_b(t)$ erzeugt, aus der im Schritt 22b durch Bezug auf einen geeignet gewählten Referenzwert $R_b$ normierte Messwerte $\hat{m}_b(t)$ erzeugt werden. In Schritt 23b wird durch Bezug zumindest eines entsprechenden Schwellenwertes $S_b$ auf den Referenzwert $R_b$ ein normierter Schwellenwert $\hat{S}_b$ gebildet, so dass in Schritt 24b ein normierter Differenzwert $\Delta\hat{m}_a(t)$ als Differenz aus dem normierten Schwellenwert $\hat{S}_b$ und dem normierten Messwert $\hat{m}_b(t)$ gebildet werden kann.

Wie durch die punktierten Linien in Figur 2 angedeutet, wird diese Abfolge von Schritten für die Messwerte jeder Messeinrichtung durchgeführt, so dass schließlich werden in den Schritten 21n, 22n, 23n und 24n normierte Differenzwerte $\Delta\hat{m}_n(t)$ gebildet werden.

Während die Schritte 21a, 21b, ..., 21n üblicherweise in der jeweiligen Messeinrichtung selbst durchgeführt und die resultierenden zeitgestempelten Messwerte über den Kommunikationsbus 13 (vgl. Figur 1) an die Leitstelleneinrichtung 12 übertragen werden, können die nachfolgenden Schritte bis zur Bildung der jeweiligen normierten Differenzwerte $\Delta\hat{m}_a(t)$, $\Delta\hat{m}_b(t)$, ..., $\Delta\hat{m}_n(t)$ beispielsweise auch in der Leitstelleneinrichtung 12 stattfinden. Es ist jedoch möglich, auch diese weiteren Schritte zur Vorverarbeitung in den jeweiligen Messeinrichtungen durchführen zu lassen und danach die jeweiligen normierten Differenzwerte an die Leitstelleneinrichtung 12 zu übertragen.

Nach der für jede Folge von Messwerten $m_a(t)$, $m_b(t)$, ..., $m_n(t)$ separat durchgeführte Vorverarbeitung findet in der Leitstelleneinrichtung 12 der folgende Schritt 25 statt, in dem eine statistische Auswertung derjenigen normierten Differenzwerte $\Delta\hat{m}_a(t)$, $\Delta\hat{m}_b(t)$, ..., $\Delta\hat{m}_n(t)$ durchgeführt wird, deren Zeitstempel t miteinander übereinstimmen, die also zu demselben Zeitpunkt erfasst worden sind.

Schließlich wird in Schritt 26 das Ergebnis der statistischen Auswertung aus Schritt 25 von dem Wert 1 abgezogen und in Schritt 27 mittels einer Anzeigeeinrichtung der Leitstelleneinrichtung 12 als Statusfunktion $F_s(t)$ dargestellt.

Aufgrund der Vorverarbeitung der Messwerte der jeweiligen Messeinrichtungen unter Bildung der jeweiligen normierten Differenzwerte und der darauf folgenden statistischen Auswertung all jener normierten Differenzwerte, die übereinstimmende Zeitstempel aufweisen, lässt sich der Zustand des elektrischen Energieversorgungsnetzes in einer sehr übersichtlichen und damit sicheren Art und Weise durchführen.

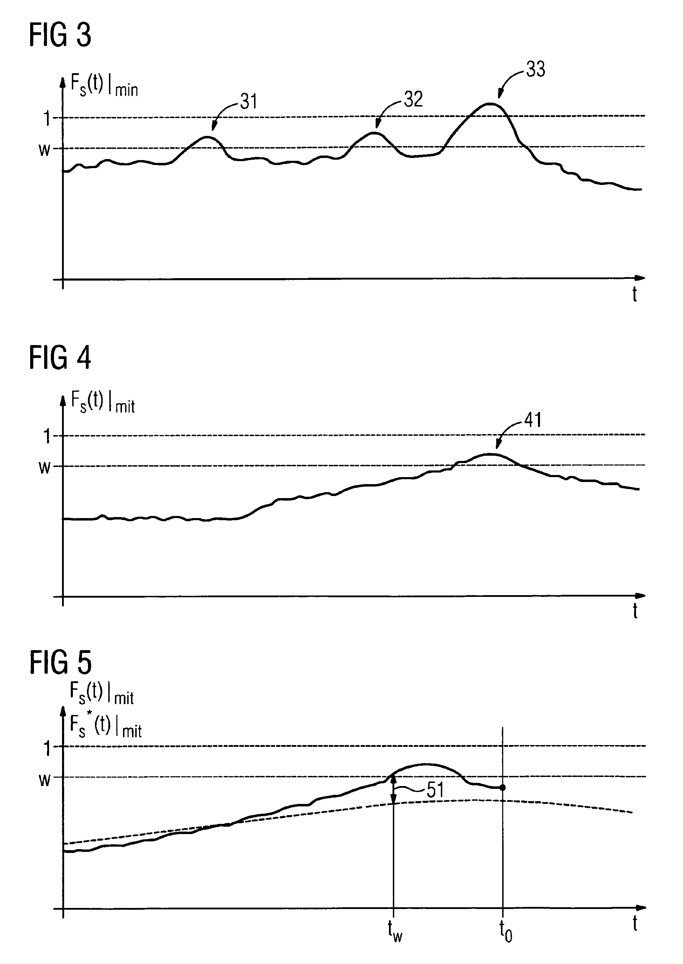

Im Folgenden sollen anhand der Figuren 3 und 4 zwei beispielhafte statistische Auswertungen zur Überwachung des elektrischen Energieversorgungsnetzes vorgestellt werden.

Beispielsweise kann nämlich als statistische Auswertung eine Minimumsfunktion durchgeführt werden, die als Ergebnis den kleinsten Wert der betrachteten normierten Differenzwerte abgibt. Die zugehörige Statusfunktion $F_s(t)|_{min}$ gibt eine Statusfunktion mit lokaler Empfindlichkeit an, da hierbei ein erhöhter Wert der Statusfunktion bereits dann auftritt, wenn von einer einzigen Messeinrichtung - und daher lokal an einer Messstelle - Messwerte erfasst werden, die sehr nahe an ihrem jeweiligen Schwellenwert liegen und daraus entsprechend kleine normierte Differenzwerte gebildet werden.

Üblicherweise wird der Verlauf der zugehörigen Statusfunktion $F_s(t)|_{min}$ bei relativ hohen Werten (also vergleichsweise nahe bei dem Wert Eins) liegen, da angenommen werden kann, dass von einer Vielzahl betrachteter Messeinrichtungen an unterschiedlichen Messstellen des elektrischen Energieversorgungsnetzes immer mindestens eine Messeinrichtung einen vergleichsweise nah am entsprechenden Schwellenwert liegenden Messwert erfasst.

So lässt sich beispielsweise aus den Verläufen an den in Figur 3 hervorgehobenen Stellen 31 und 32 für das Bedienpersonal der Leitstelle einfach erkennen, dass zumindest eine Messeinrichtung momentan nah an ihrem jeweiligen Schwellenwert liegende Messwerte erfasst. Aus dem Verlauf an der weiteren hervorgehobenen Stelle 33 kann das Bedienpersonal außerdem sehr einfach erkennen, dass an zumindest einer Messstelle die erfassten Messwerte den jeweils zugehörigen Schwellenwert über- oder unterschreiten, so dass hier ein kritischer Zustand vorliegt.

Die Leitstelleneinrichtung kann beispielsweise entsprechend eingerichtet sein, um dem Bedienpersonal die Möglichkeit zu geben, durch Markieren einer beliebigen Stelle in dem Verlauf der jeweiligen Statusfunktion, beispielsweise durch Markieren des Maximalwertes des hervorgehobenen Verlaufs 33, Informationen über diejenige Messeinrichtung anzugeben, mit der der jeweilige Messwert erfasst worden ist. Auf diese Weise kann das Bedienpersonal zu entsprechend interessanten Verläufen der Statusfunktion die jeweiligen Informationen darüber erlangen, mit welchen Messeinrichtungen - und damit auch an welchen Messstellen in dem elektrischen Energieversorgungsnetz - die zu dem jeweiligen Verlauf der Statusfunktion gehörenden Messwerte erfasst worden sind. Bei Kenntnis des Ortes der Störung lassen sich entsprechende Gegenmaßnahmen durchführen.

Der besondere Vorteil der in Figur 3 dargestellten Statusfunktion $F_s(t)|_{min}$, die durch die statistische Auswertung durch Anwendung einer Minimumsfunktion generiert worden ist, besteht darin, dass das Bedienpersonal auf einen Blick für alle Messeinrichtungen (und damit auch alle Messstellen) feststellen kann, ob irgendwo in dem elektrischen Energieversorgungsnetz ein kritischer Zustand vorliegt. Befindet sich nämlich der Verlauf der entsprechenden Statusfunktion $F_s(t)|_{min}$ deutlich unterhalb des Wertes 1, so kann das Bedienpersonal auf einen Blick ableiten, dass sich die Messwerte aller Messeinrichtungen momentan im sicheren Bereich befinden und der Zustand des elektrischen Energieversorgungsnetzes entsprechend sicher ist. Nähert sich der Verlauf der entsprechenden Zustandsfunktion $F_s(t)|_{min}$ dem Wert Eins an oder überschreitet ihn sogar, so kann das Bedienpersonal hieraus erkennen, dass an zumindest einer Messstelle in dem elektrischen Energieversorgungsnetz ein kritischer Zustand vorliegt, ohne die einzelnen an den jeweiligen Messstellen erfassten Messwerte gesondert im Auge haben zu müssen.

Die Leitstelleneinrichtung kann ferner dazu eingerichtet sein, den Verlauf der Statusfunktion automatisch zu überwachen und ein Warnsignal abzugeben, wenn der Verlauf der Statusfunktion eine erste Schwelle W überschreitet. Ein solches Warnsignal wird in Figur 3 beispielsweise während der Verläufe 31 und 32 abgegeben. Dieses Warnsignal soll dem Bedienpersonal der Leitstelleneinrichtung den Hinweis geben, dass sich der Verlauf der Statusfunktion dem Wert Eins annähert, also ein kritischer Zustand des Energieversorgungsnetzes in naher Zukunft eintreten könnte. Mit entsprechend geeigneten Gegenmaßnahmen, wie z.B. dem Umleiten elektrischer Energie auf alternative Leitungen, dem Ansteuern aktiver Netzfilter, dem Ein- oder Ausschalten von Blindleistungskompensatoren oder dem Öffnen von Leistungsschaltern, kann das Bedienpersonal bei vorliegendem Warnsignal möglicherweise den Eintritt des kritischen Zustandes verhindern.

Die Leitstelleneinrichtung kann ferner dazu eingerichtet sein, ein Alarmsignal zu erzeugen, wenn der Wert der Statusfunktion den Wert Eins überschreitet. Ein Alarmsignal würde in Figur 3 beispielsweise in der Nähe der Stelle 33 erzeugt werden, sobald der Verlauf der Statusfunktion den Wert 1 überschritten hat.

In Figur 4 ist ein Ausführungsbeispiel für eine Statusfunktion $F_s(t)|_{mit}$ angegeben, die durch eine statistische Auswertung in Form einer Mittelwertbildung über alle normierten Differenzwerte mit übereinstimmendem Zeitstempel erzeugt worden ist. Mit der Statusfunktion $F_s(t)|_{mit}$ wird der Status des elektrischen Energieversorgungsnetzes mit globaler Empfindlichkeit angezeigt, da aus der Statusfunktion $F_s(t)|_{mit}$ abgelesen werden kann, ob sich das Energieversorgungsnetz im Mittel in einem sicheren Zustand befindet oder nicht.

Zur Bestimmung des Mittelwertes können unterschiedliche Formen der Mittelwertbildung verwendet werden. Beispielsweise kann aus den normierten Differenzwerten ein arithmetischer Mittelwert gebildet werden. Es kann jedoch auch eine Bildung von sogenannten RMS-Werten (Root-Mean-Square) oder eine andere geeignete Mittelwertfunktionen eingesetzt werden.

Verglichen mit der auf der Minimumsfunktion beruhenden Statusfunktion $F_s(t)|_{min}$ wird die in dem aktuellen Ausführungsbeispiel ermittelte Statusfunktion $F_s(t)|_{mit}$ entsprechend kleineren Schwankungen unterworfen sein und eher Werte im mittleren Bereich annehmen.

Der Vorteil der Darstellung der Statusfunktion $F_s(t)|_{mit}$ liegt darin, dass das Bedienpersonal hieraus erkennen kann, wie es um den Zustand des gesamten Energieversorgungsnetzes gestellt ist. Steigt die Statusfunktion $F_s(t)|_{mit}$ beispielsweise kontinuierlich an und überschreitet, wie an der in Figur 4 hervorgehobenen Stelle 41 gezeigt, sogar den für das Warnsignal erforderlichen Schwellenwert W, so bedeutet dies, dass sich der Zustand des elektrischen Energieversorgungsnetzes im Ganzen einem kritischen Zustand nähert und entsprechende Gegenmaßnahmen getroffen werden sollten.

Auch bei diesem Ausführungsbeispiel kann die Leitstelleneinrichtung dazu eingerichtet sein, durch entsprechend automatische Überwachung der Statusfunktion $F_s(t)|_{mit}$ bei Überschreitung eines Warn-Schwellenwertes W ein Warnsignal und bei Überschreitung des Wertes Eins ein Alarmsignal abzugeben.

Eine besonders gute Übersicht über den aktuellen Zustand des Energieversorgungsnetzes kann dann erreicht werden, wenn die in Figuren 3 und 4 erläuterten Darstellungsformen von der Leitstelleneinrichtung gleichzeitig angezeigt werden, d. h. dass dem Bedienpersonal der Zustand des elektrischen Energieversorgungsnetzes gleichzeitig sowohl mit lokaler als auch mit globaler Empfindlichkeit angezeigt wird. Bleibt nämlich der Verlauf der globalen Statusfunktion $F_s(t)|_{mit}$ nahezu konstant und überschreitet gleichzeitig der Wert der lokalen Zustandsfunktion $F_s(t)|_{min}$ den Wert Eins, so kann hieraus sehr leicht geschlossen werden, dass das elektrische Energieversorgungsnetz momentan einer lediglich lokal begrenzten Störung unterworfen ist, die durch entsprechende lokale Gegenmaßnahmen behoben werden kann. Finden jedoch Überschreitungen der lokalen Statusfunktion $F_s(t)|_{min}$ über den Wert Eins statt und liegt gleichzeitig der Wert der globalen Statusfunktion $F_s(t)|_{mit}$ in der Nähe des Wertes Eins, so kann hieraus geschlossen werden, dass ein zumindest einen großen Teil des elektrischen Energieversorgungsnetzes betreffendes Problem vorliegt und entsprechende Gegenmaßnahmen getroffen werden müssen.

Die Leitstelleneinrichtung kann außerdem dazu eingerichtet sein, dass sie für jede Messeinrichtung bzw. jede Messstelle Vorhersage-Messwerte berechnet, die einen erwarteten Verlauf der jeweiligen Messwerte an derjenigen Messstelle, an der die jeweilige Messeinrichtung angeordnet ist, angeben.

Ein solcher erwarteter Verlauf von Vorhersage-Messwerten kann beispielsweise dadurch ermittelt werden, dass eine von einer Netzleitstelle ohnehin zur Verfügung gestellte Prognose der Lastflüsse in dem elektrischen Energieversorgungsnetz für einen zukünftigen Zeitraum als Grundlage dient und aus den entsprechenden Lastflüssen die an den jeweiligen Messstellen vorliegenden Messwerte abgeleitet werden. Hierzu kann eine mathematische Modellierung des elektrischen Energieversorgungsnetzes verwendet werden, in der die erwarteten Lastflüsse vorgegeben werden, um den Verlauf der Messwerte für jede Messstelle ermitteln zu können. Um die Genauigkeit der Bildung der erwarteten Messwerte mit dieser Methode noch weiter zu erhöhen, kann auch ein sogenannter Kraftwerkseinsatzplan hinzugezogen werden, der die geplante Regelung von Energieerzeugungseinheiten, wie beispielsweise großen Kraftwerken, angibt, so dass die Auswirkungen der Regelung dieser Energieerzeugungseinheiten in die mathematische Modellierung des Energieversorgungsnetzes mit aufgenommen werden und entsprechend genauere Vorhersage-Messwerte für die einzelnen Messeinrichtungen bzw. Messstellen berechnet werden können.

Eine alternative Methode zur Ermittlung der Vorhersage-Messwerte kann beispielsweise bei Verwendung eines entsprechend angelernten neuronalen Netzes eingesetzt werden. Das neuronale Netz ist hierbei durch vergangene Verläufe der tatsächlichen Messwerte an den entsprechenden Messstellen angelernt worden und kann durch Berücksichtigung äußerer Parameter, wie beispielsweise Uhrzeit, Wochentag, Jahreszeit sowie Wetter- und Klimainformationen, eine Vorhersage des zukünftigen Verlaufes der Messwerte erzeugen.

Eine weitere alternative Methode zur Bestimmung der Vorhersage-Messwerte ist dadurch gegeben, dass zukünftige Umgebungsparameter, wie beispielsweise Wetterinformationen aus einer Wettervorhersage, bereitgestellt werden, die den Verlauf der Messwerte in einem entsprechenden zukünftigen Zeitraum beeinflussen können. Aus einer Datenbank mit gespeicherten Archivdaten der tatsächlichen vergangenen Messwertverläufe können dann als Vorhersage-Messwerte diejenigen Messwerte für jede Messstelle ausgewählt werden, deren Umgebungsparameter am ehesten mit den erwarteten Umgebungsparametern übereinstimmen. Hierzu müssen in der Archivdatenbank natürlich auch die fraglichen Umgebungsparameter, wie beispielsweise Wetterinformationen an den einzelnen Messstellen, Uhrzeit, Wochentag sowie Jahreszeit, gespeichert sein, um den entsprechenden Vergleich durchführen zu können.

Wenn entsprechend einer der beschriebenen Vorgehensweisen die Vorhersage-Messwerte für eine Messeinrichtung an einer Messstelle bestimmt worden sind, können hieraus analog zu der Vorgehensweise bei der Verarbeitung der entsprechenden Messwerte, wie sie in Figur 2 gezeigt worden ist, normierte Vorhersage-Messwerte durch Bezug auf einen Referenzwert, normierte Schwellenwerte aus zumindest einem zugehörigen Schwellenwert, der auf den Referenzwert bezogen wird, und normierte Vorhersage-Differenzwerte durch Differenzbildung aus dem normierten Schwellenwert und dem jeweiligen normierten Vorhersage-Messwert gebildet werden. Hierbei muss lediglich darauf geachtet werden, dass dieselben Referenzwerte und Schwellenwerte verwendet werden, wie sie bei den tatsächlichen Messwerten zur Vorverarbeitung der Daten eingesetzt werden.

Schließlich kann eine jeweilige Vorhersage-Statusfunktion aus einer entsprechenden statistischen Auswertung aller Vorhersage-Differenzwerte mit übereinstimmendem Zeitstempel ermittelt werden, indem jeweils die Differenz zwischen dem Wert Eins und dem Ergebnis dieser statistischen Auswertung gebildet wird. Die entsprechende Vorhersage-Statusfunktion wird dann zusätzlich mittels der Leitstelleneinrichtung angezeigt.

Hierzu ist in Figur 5 beispielhaft für eine durch Mittelwertbildung erzeugte Statusfunktion $F_s(t)|_{mit}$ (durchgezogene Linie) die entsprechende durch Mittelwertbildung erzeugte Vorhersagestatusfunktion $F^*_s(t)|_{mit}$ (gestrichelte Linie) dargestellt. Die tatsächliche Statusfunktion $F_s(t)|_{mit}$ endet mit dem aktuellen Zeitpunkt bei $t_0$. Der Verlauf der entsprechenden Vorhersage-Statusfunktion $F^*_s(t)|_{mit}$ stellt bis zum Zeitpunkt $t_0$ den in der Vergangenheit vorhergesagten Verlauf dar, während sie für einen auf den aktuellen Zeitpunkt $t_0$ folgenden zukünftigen Zeitbereich den erwarteten Verlauf der Statusfunktion $F_s(t)|_{mit}$ angibt.

Durch zusätzliche Darstellung einer Vorhersage-Statusfunktion zu einer tatsächlichen Statusfunktion kann dem Bedienpersonal in der Leitstelle vorteilhaft die Möglichkeit gegeben werden, eine Einschätzung vorzunehmen, ob ein bestimmter Verlauf, beispielsweise ein Ansteigen der tatsächlichen Statusfunktion, erwartet wird, oder ob es sich um ein unerwartet eintretendes Ereignis handelt. Beispielsweise kann erwartet werden, dass zu bestimmten Tageszeiten, zu denen traditionell eine Vielzahl elektrischer Verbraucher eingeschaltet wird, die Lastflüsse in dem elektrischen Energieversorgungsnetz ansteigen, ohne dass hieraus ein Hinweis auf einen möglicherweise eintretenden kritischen Zustand des elektrischen Energieversorgungsnetzes abgeleitet werden kann. Die entsprechende Vorhersage-Statusfunktion würde in einem solchen Zeitraum ebenfalls ansteigen, so dass bei Vergleich der Vorhersage-Statusfunktion mit der entsprechenden tatsächlichen Statusfunktion erkannt wird, dass der ansteigende Verlauf der Statusfunktion einem erwarteten Ansteigen entspricht. In Figur 5 ist ein solches erwartetes Verhalten der Statusfunktion $F_s(t)|_{mit}$ beispielsweise im (vergangenen) Zeitbereich bis zum Zeitpunkt $t_w$ dargestellt.

Weicht die tatsächliche Statusfunktion jedoch deutlich von der Vorhersage-Statusfunktion ab, so kann daraus geschlossen werden, dass ein nicht vorhergesagtes - und damit nicht erwartetes - Ereignis für das Ansteigen der Statusfunktion verantwortlich ist, und es können somit schon zu einem frühen Zeitpunkt entsprechende Analysen und ggf. Gegenmaßnahmen durchgeführt werden.

Zur Unterstützung des Bedienpersonals kann die Leitstelleneinrichtung beispielsweise dazu eingerichtet sein, eine Analyse der Verläufe der tatsächlichen Statusfunktion und der Vorhersage-Statusfunktion durchzuführen, indem sie die Differenz zwischen der Statusfunktion und der Vorhersage-Statusfunktion bildet, und ein Warnsignal abzugeben, wenn die Differenz einen bestimmten Schwellenwert übersteigt, da zu diesem Zeitpunkt die Abweichung der tatsächlichen Statusfunktion von der Vorhersage-Statusfunktion sehr deutlich ist. Beispielhaft ist in Figur 5 der Zeitpunkt $t_w$ angezeigt, zu dem die Differenz (dargestellt durch einen Doppelpfeil 51 zwischen der tatsächlichen Statusfunktion $F_s(t)|_{mit}$ und der Vorhersage-Statusfunktion $F^*_s(t)|_{mit}$) einen vorgegebenen Schwellenwert übersteigt. Zu diesem Zeitpunkt wird von der Leitstelleneinrichtung ein Warnsignal abgegeben, so dass das Bedienpersonal auf die Abweichung hingewiesen wird.

Die Vorhersage-Statusfunktion kann selbstverständlich auch für über eine andere statistische Auswertung erzeugte Statusfunktionen verwendet werden, beispielsweise kann für die in Figur 3 dargestellte, durch die Minimumsfunktion erzeugte Statusfunktion $F_s(t)|_{min}$ eine entsprechende Vorhersagestatusfunktion $F^*_s(t)|_{min}$ erzeugt werden.

Mit dem beschriebenen Verfahren zur Überwachung eines elektrischen Energieversorgungsnetzes kann also dem Bedienpersonal in einer Leitstelle auf sehr einfache und übersichtliche Weise eine Information über den Zustand des elektrischen Energieversorgungsnetzes gegeben werden. Hierbei können je nach Art der statistischen Auswertung Schwerpunkte auf verschiedene Stellen des elektrischen Energieversorgungsnetzes gelegt werden, beispielsweise kann die Überwachung mit lokaler Empfindlichkeit oder mit globaler Empfindlichkeit entsprechend der im vorgehenden beispielhaft beschriebenen Statusfunktionen durchgeführt werden.

Durch Einführung der Vorhersage-Statusfunktion kann dem Bedienpersonal ein zusätzliches Vergleichselement an die Hand gegeben werden, um die Plausibilität des Verlaufs der jeweiligen Statusfunktion zu prüfen.

Dadurch, dass dem Bedienpersonal auf diese Weise ein Überblick über das gesamte elektrische Energieversorgungsnetz anhand von einer oder wenigen Statuskurven gegeben wird, kann die Übersicht über den Zustand des elektrischen Energieversorgungsnetzes im Vergleich zur gesonderten Beobachtung der Verläufe einer Vielzahl von Messwerten deutlich gesteigert werden, so dass die Sicherheit im Betrieb des elektrischen Energieversorgungsnetzes zunimmt.

## Patentansprüche

1. Verfahren zum Überwachen eines elektrischen Energieversorgungsnetzes, bei dem

- an mindestens zwei unterschiedlichen Messstellen in dem Energieversorgungsnetz einen Zustand des elektrischen Energieversorgungsnetzes charakterisierende Messwerte erfasst werden; und
- jedem Messwert ein den Zeitpunkt seiner Erfassung angebender Zeitstempel zugeordnet wird;
und
- jeder Messwert auf einen Referenzwert bezogen wird, indem der Quotient aus dem jeweiligen Messwert und dem Referenzwert unter Bildung eines normierten Messwertes bestimmt wird, wobei der Referenzwert einen Auslegungswert des elektrischen Energieversorgungsnetzes an der jeweiligen Messstelle angibt;
- für jeden Messwert zumindest ein Schwellenwert bereitgestellt wird, der eine Schwelle angibt, ab deren Über- oder Unterschreitung ein kritischer Zustand des Energieversorgungsnetzes an der jeweiligen Messstelle eintritt;
- jeder Schwellenwert auf den Referenzwert des zugehörigen Messwertes bezogen wird, indem der Quotient aus dem jeweiligen Schwellenwert und dem Referenzwert unter Bildung eines normierten Schwellenwertes bestimmt wird;
- der Betrag der Differenz aus jedem normierten Schwellenwert und seinem zugehörigen normierten Messwert unter Bildung eines normierten Differenzwertes bestimmt wird, wobei bei Verwendung mehrerer Schwellenwerte für einen einzelnen Messwert, der normierte Differenzwert den Wert des kleinsten Betrags der Differenzen annimmt;
- jeweils diejenigen für die jeweiligen Messstellen bestimmten normierten Differenzwerte, deren Messwerte übereinstimmende Zeitstempel aufweisen, einer statistischen Auswertung unterzogen werden, wobei als statistische Auswertung eine Minimumsfunktion durchgeführt wird, die als Ergebnis den kleinsten Wert der normierten Differenzwerte abgibt und/oder als statistische Auswertung eine Mittelwertfunktion durchgeführt wird, die als Ergebnis den Mittelwert der normierten Differenzwerte abgibt;

- für jeden durch die Zeitstempel angegebenen Zeitpunkt die Differenz aus dem Wert Eins und dem Ergebnis der jeweiligen statistischen Auswertung unter Bildung eines zeitlichen Verlaufs einer den Status des Energieversorgungsnetzes angebenden Statusfunktion gebildet wird; und

- die Statusfunktion zum Überwachen des Energieversorgungsnetzes in einer Leitstelleneinrichtung (12) des Energieversorgungsnetzes angezeigt wird.

2. Verfahren nach Anspruch 1,
   **dadurch gekennzeichnet, dass**

   - die Messwerte an den Messstellen mit Phasor-Messgeräten erfasst werden.

3. Verfahren nach Anspruch 2,
   **dadurch gekennzeichnet, dass**

   - die Messwerte Stromzeigermesswerte, Spannungszeigermesswerte oder davon abgeleitete Messwerte sind.

4. Verfahren nach einem der vorangehenden Ansprüche,
   **dadurch gekennzeichnet, dass**

   - der Verlauf der Statusfunktion überwacht wird und ein Alarmsignal ausgegeben wird, wenn der Verlauf den Wert Eins überschreitet.

5. Verfahren nach einem der vorangehenden Ansprüche,
   **dadurch gekennzeichnet, dass**

   - der Verlauf der Statusfunktion überwacht wird und ein Warnsignal ausgegeben wird, wenn sich der Verlauf dem Wert Eins annähert.

6. Verfahren nach einem der vorangehenden Ansprüche,
   **dadurch gekennzeichnet, dass**

   - für die mindestens zwei Messstellen auch Vorhersage-Messwerte gebildet werden, die den erwarteten zukünftigen Verlauf der Messwerte an der jeweiligen Messstelle angeben;
   - aus den jeweiligen Vorhersage-Messwerten und den zu den entsprechenden Messwerten zugehörenden Schwellenwerten durch Bezug auf die entsprechenden Referenzwerte normierte Vorhersage-Messwerte, normierte Schwellenwerte und durch Differenzbildung der normierten Schwellenwerte mit den normierten Vorhersage-Messwerten normierte Vorhersage-Differenzwerte gebildet werden;

- die normierten Vorhersage-Differenzwerte mit übereinstimmendem Zeitstempel derselben statistischen Auswertung unterzogen werden wie die normierten Differenzwerte;

- eine Vorhersage-Statusfunktion durch Differenzbildung aus dem Wert Eins und dem Ergebnis der statistischen Auswertung für einen jeweiligen Zeitpunkt gebildet wird; und

- der zeitliche Verlauf der Vorhersage-Statusfunktion in der Leitstelleneinrichtung (12) zusätzlich zu dem Verlauf der Statusfunktion angezeigt wird.

7. Verfahren nach Anspruch 6,
   **dadurch gekennzeichnet, dass**

   - die Vorhersage-Messwerte mittels eines durch vergangene Verläufe der Messwerte angelernten neuronalen Netzes bestimmt werden.

8. Verfahren nach Anspruch 6,
   **dadurch gekennzeichnet, dass**

   - mit einer Lastfluss-Vorhersage, die die zukünftig erwarteten Lastflüsse in dem Energieversorgungsnetz angibt, anhand eines Modellabbildes des Energieversorgungsnetzes eine Simulation des Verhaltens des Energieversorgungsnetzes durchgeführt wird;
   - aus der Simulation die für die jeweiligen Messstellen entsprechend der erwarteten Lastflüsse gültigen Messwerte abgeleitet werden; und
   - die abgeleiteten Messwerte als Vorhersage-Messwerte verwendet werden.

9. Verfahren nach Anspruch 8,
   **dadurch gekennzeichnet, dass**

   - in die Simulation des Verhaltens des elektrischen Energieversorgungsnetzes auch ein Kraftwerks-Einsatzplan einbezogen wird, der die Regelung von Energieerzeugungseinheiten des elektrischen Energieversorgungsnetzes für einen zukünftigen Zeitraum auf Basis der Lastfluss-Vorhersage angibt.

10. Verfahren nach Anspruch 6,
    **dadurch gekennzeichnet, dass**

    - erwartete Umgebungsparameter bestimmt werden, die zumindest eine Information über für einen zukünftigen Zeitraum erwartete Wetterbedingungen enthalten;

- aus einer Datenbank mit archivierten Verläufen einer Statusfunktion derjenige Verlauf ausgewählt wird, dessen zugeordnete Umgebungsparameter am weitesten mit den erwarteten Umgebungsparametern übereinstimmen; und

- die zu dem ausgewählten Verlauf der Statusfunktion gehörenden Messwerte als Vorhersage-Messwerte verwendet werden.

**11.** Verfahren nach einem der Ansprüche 6 bis 10,

- der aktuelle Wert der Statusfunktion mit dem für den aktuellen Zeitpunkt vorhergesagten Wert der Vorhersage-Statusfunktion durch Differenzbildung verglichen wird; und

- ein zweites Warnsignal erzeugt wird, wenn der Betrag der Differenz einen vorgegebenen Schwellenwert überschreitet.

**12.** Überwachungssystem (10) für ein elektrisches Energieversorgungsnetz, das umfasst:

- Messeinrichtungen (11a - 11h) zur Erfassung von den Zustand des elektrischen Energieversorgungsnetzes angebenden Messwerten an zumindest zwei Messstellen des Energieversorgungsnetzes; und

- eine Leitstelleneinrichtung (12), die mit den Messeinrichtungen (11a - 11h) zur Übertragung der Messwerte in Kommunikationsverbindung steht;

- wobei das Überwachungssystem (10) dazu eingerichtet ist, zur Überwachung des Energieversorgungsnetzes ein Verfahren gemäß einem der Ansprüche 1 bis 11 durchzuführen.

**13.** Leitstelleneinrichtung (12), zur Überwachung eines elektrischen Energieversorgungsnetzes, **dadurch gekennzeichnet, dass**

- die Leitstelleneinrichtung (12) dazu eingerichtet ist, zur Überwachung des Energieversorgungsnetzes ein Verfahren gemäß einem des Ansprüche 1 bis 11 durchzuführen.

**Claims**

**1.** Method for monitoring an electrical power supply system, in which

- measured values which characterize a state of the electrical power supply system are detected at at least two different measurement points in the power supply system; and

- a time stamp, which indicates the time of its detection, is allocated to each measured value; and

- each measured value is related to a reference value by determining the quotient of the respective measured value and the reference value, forming a normalized measured value, with the reference value indicating a design value of the electrical power supply system at the respective measurement point;

- at least one threshold value is provided for each measured value, which indicates a threshold whose overshooting or undershooting indicates a critical state of the power supply system at the respective measurement point;

- each threshold value is related to the reference value of the associated measured value by determining the quotient of the respective threshold value and the reference value, forming a normalized threshold value;

- the magnitude of the difference from each normalized threshold value and its associated normalized measured value is determined, forming a normalized difference value, with the normalized difference value assuming the value of the lowest magnitude of the differences when using a plurality of threshold values for a single measured value;

- those normalized difference values which are determined for the respective measurement points and whose measured values have corresponding time stamps are each subjected to statistical evaluation, with a minimum function which outputs the lowest value of the normalized difference values as the result being implemented as the statistical evaluation and/or a mean-value function which outputs the mean value of the normalized difference values as the result being implemented as the statistical evaluation;

- the difference between the value unity and the result of the respective statistical evaluation is formed for each time indicated by the time stamps, forming a time profile of a status function which indicates the status of the power supply system; and

- the status function is indicated in a control center device (12) for the power supply system, in order to monitor the power supply system.

**2.** Method according to Claim 1, **characterized in that**

- the measured values at the measurement points are detected using phasor measurement instruments.

**3.** Method according to Claim 2, **characterized in that**

- the measured values are current vector measured values, voltage vector measured values or measured values derived from them.

4. Method according to one of the preceding claims, **characterized in that**

- the profile of the status function is monitored and an alarm signal is output if the profile exceeds the value unity.

5. Method according to one of the preceding claims, **characterized in that**

- the profile of the status function is monitored, and a warning signal is output if the profile approaches the value unity.

6. Method according to one of the preceding claims, **characterized in that**

- predicted measured values are also formed for the at least two measurement points, which predicted measured values indicate the expected future profile of the measured values at the respective measurement point;
- the respective predicted measured values and the threshold values associated with the corresponding measured values are used, by reference to the corresponding reference values, to form normalized predicted measured values, normalized threshold values and, by subtraction of the normalized threshold values and the normalized predicted measured values, normalized predicted difference values;
- the normalized predicted difference values with a corresponding time stamp are subjected to statistical evaluation in the same way as the normalized difference values;
- a predicted status function is formed by subtraction from the value unity and the result of the statistical evaluation for a respective time; and
- the time profile of the predicted status function is indicated in the control center device (12), in addition to the profile of the status function.

7. Method according to Claim 6, **characterized in that**

- the predicted measured values are determined by means of a neural network which learns from previous profiles of the measured values.

8. Method according to Claim 6, **characterized in that**

- a simulation of the behavior of the power supply system is carried out by means of a load flow prediction, which indicates the future expected load flows in the power supply system, on the basis of a model map of the power supply system;
- the measured values which are applicable to the respective measurement points corresponding to the expected load flows are derived from the simulation; and
- the derived measured values are used as predicted measured values.

9. Method according to Claim 8, **characterized in that**

- a power station usage plan is also included in the simulation of the behavior of the electrical power supply system, and indicates the closed-loop control of power generating units in the electrical power supply system for a future time period on the basis of the load flow prediction.

10. Method according to Claim 6, **characterized in that**

- expected environmental parameters are determined, which contain at least information about weather conditions expected for a future time period;
- that profile whose associated environmental parameters best match the expected environmental parameters is selected from a database having archived profiles of a status function; and
- the measured values associated with the selected profile of the status function are used as predicted measured values.

11. Method according to one of Claims 6 to 10, **characterized in that**

- the current value of the status function is compared with the predicted status function value predicted for the current time, by subtraction; and
- a second warning signal is produced if the magnitude of the difference overshoots a predetermined threshold value.

12. Monitoring system (10) for an electrical power supply system, which comprises:

- measurement devices (11a - 11h) for detection of measured values, which indicate the state of the electrical power supply system, at at least two measurement points in the power supply system; and
- a control center device (12), which has a communication link to the measurement devices (11a - 11h) for transmission of the measured values;
- with the monitoring system (10) being designed to carry out a method according to one of Claims 1 to 11, for monitoring of the power supply system.

**13.** Control center device (12) for monitoring an electrical power supply system,
**characterized in that**

- the control center device (12) is designed to carry out a method according to one of Claims 1 to 11, for monitoring of the power supply system.

## Revendications

**1.** Procédé de contrôle d'un réseau d'alimentation en énergie électrique, dans lequel

- on relève en au moins deux points de mesure différents du réseau d'alimentation en énergie des valeurs de mesure caractérisant un état du réseau d'alimentation en énergie électrique ; et
- on affecte à chaque valeur de mesure un horodatage indiquant l'instant de son relevé ; et
- on rapporte chaque valeur de mesure à une valeur de référence en déterminant, avec formation d'une valeur de mesure normée, le quotient de la valeur de mesure respective, la valeur de référence indiquant une valeur de conception du réseau d'alimentation en énergie électrique au point de mesure respective ;
- pour chaque valeur de mesure, on met à disposition au moins une valeur de seuil, à partir du dépassement duquel, par le haut ou par le bas, un état critique du réseau d'alimentation en énergie apparaît au point de mesure respectif ;
- on rapporte chaque valeur de seuil à la valeur de référence de la valeur de mesure associée, en déterminant avec formation d'une valeur de seuil normée, le quotient de la valeur de seuil respectif par la valeur de référence ;
- on détermine, avec formation d'une valeur de différence normée, la valeur absolue de la différence entre chaque valeur de seuil normée et sa valeur de mesure normée associée, dans lequel, lorsque l'on utilise plusieurs valeurs de seuil pour une valeur de mesure individuelle, la valeur de différence normée prend la valeur de la valeur absolue la plus petite des différences ;
- on soumet respectivement les valeurs de différence normées, qui ont été déterminées pour les points de mesure respectifs et dont les valeurs de mesure ont des horodatages qui coïncident, à une évaluation statistique, en effectuant, comme évaluation statistique une fonction de minimum, qui donne comme résultat la valeur la plus petite des valeurs de différence normées et/ou on effectue, comme évaluation statistique, une fonction de moyenne, qui indique comme résultat la moyenne des valeurs de différence normées ;
- pour chaque instant indiqué par l'horodateur, on forme la différence entre la valeur un et le résultat de l'évaluation statistique respective avec formation d'une courbe dans le temps d'une fonction d'état indiquant l'état du réseau d'alimentation en énergie ; et
- on indique la fonction d'état pour le contrôle du réseau d'alimentation en énergie dans un poste (12) de contrôle du réseau d'alimentation en énergie.

**2.** Procédé suivant la revendication 1
**caractérisé en ce que**

- on relève les valeurs de mesure aux points de mesure par des appareils de mesure de vecteur de Fremel.

**3.** Procédé suivant la revendication 2,
**caractérisé en ce que**

- les valeurs de mesure sont des valeurs de mesure de vecteur de courant, des valeurs de mesure de vecteur de tension ou des valeurs de mesure qui en dérivent.

**4.** Procédé suivant l'une des revendications précédentes,
**caractérisé en ce que**

- on contrôle la courbe de la fonction d'état et on émet un signal d'alerte lorsque la courbe dépasse la valeur un.

**5.** Procédé suivant l'une des revendications précédentes,
**caractérisé en ce que**

- on contrôle la courbe de la fonction d'état et on émet un signal lorsque la courbe se rapproche de la valeur un.

**6.** Procédé suivant l'une des revendications précédentes,
**caractérisé en ce que**

- pour les au moins deux points de mesure, on forme aussi des valeurs de mesure de prédiction, qui indiquent la courbe à venir escomptée des valeurs de mesure au point de mesure respectif ;

- à partir des valeurs de mesure de prédiction respectives et des valeurs de seuil associées aux valeurs de mesure correspondantes, on forme, par rapport à des valeurs de mesure de prédiction normées sur les valeurs de référence correspondantes, des valeurs de seuil normées et, par formation de différence entre les valeurs de seuil normées et les valeurs de mesure de prédiction normées, des valeurs de différence de prédiction normées ;
- on soumet les valeurs de différence de prédiction normées ayant un horodatage qui coïncide à la même évaluation statistique que les valeurs de différence normées ;
- on forme une fonction d'état de prédiction par formation de la différence entre la valeur un et le résultat de l'évaluation statistique pour un instant respectif ; et
- on indique la courbe dans le temps de la fonction d'état de prédiction au poste (12) de contrôle en plus de la courbe de la fonction d'état.

7. Procédé suivant la revendication 6, **caractérisé en ce que**

- on détermine les valeurs de mesure de prédiction au moyen d'un réseau neuronal ayant subi un apprentissage par des courbes passées des valeurs de mesure.

8. Procédé suivant la revendication 6, **caractérisé en ce que**

- par une prédiction de flux de charge, qui indique les flux de charge escomptés à l'avenir dans le réseau d'alimentation en énergie, on effectue, au moyen d'une représentation par modèle du réseau d'alimentation en énergie, une simulation du comportement du réseau en alimentation en énergie ;
- on déduit de la simulation les valeurs de mesure valables pour les points de mesure respectifs correspondants aux flux de charge escomptés ; et
- on utilise des valeurs de mesure déduites comme valeurs de mesure de prédiction.

9. Procédé suivant la revendication 8, **caractérisé en ce que**

- dans la simulation du comportement du réseau d'alimentation en énergie électrique, on incorpore également un plan d'utilisation d'une centrale, qui indique la régulation d'unités de production d'énergie du réseau d'alimentation en énergie électrique pour un laps de temps à venir sur la base de la prédiction de flux de charge.

10. Procédé suivant la revendication 6, **caractérisé en ce que**

- on détermine des paramètres ambiants escomptés, qui contiennent au moins une information sur des conditions météorologiques escomptées pendant un laps de temps à venir ;
- on choisit dans une base de données, ayant des courbes archivées d'une fonction d'état, la courbe dont le paramètre ambiant associé coïncide le plus avec les paramètres ambiants escomptés ; et
- on utilise, comme valeur de mesure de prédiction, les valeurs de mesure appartenant à la courbe de fonction d'état qui a été choisie.

11. Procédé suivant l'une des revendications 6 à 10,

- on compare, par formation d'une différence, la valeur présente de la fonction d'état à la valeur escomptée pour l'instant présent de la fonction d'état de prédiction ; et
- on produit un deuxième signal d'alerte, si la valeur absolue de la différence dépasse une valeur de seuil prescrite.

12. Système (10) de contrôle d'un réseau d'alimentation en énergie électrique, qui comprend :

- des dispositifs (11a à 11h) de mesure pour le relevé de valeurs de mesure indiquant l'état du réseau d'alimentation en énergie électrique en au moins deux points de mesure du réseau d'alimentation en énergie électrique ; et
- un poste (12) de contrôle, qui est en communication avec les dispositifs (11a à 11h) de mesure pour la transmission des valeurs de mesure ;
- dans lequel le système (10) de contrôle est conçu pour effectuer pour le contrôle du réseau d'alimentation en énergie, un procédé suivant l'une des revendications 1 à 11.

13. Poste (12) de contrôle, pour le contrôle d'un réseau d'alimentation en énergie électrique, **caractérisé en ce que**

- le poste (12) de contrôle est conçu pour effectuer, pour le contrôle du réseau d'alimentation en énergie, un procédé suivant l'une des revendications 1 à 11.

**FIG 1**

## FIG 2

```
    21a              21b                        21n
     ┌────────────┐   ┌────────────┐            ┌────────────┐
     │            │   │            │            │            │
     │      ┌─┐   │   │      ┌─┐   │  . . . . . │      ┌─┐   │
     │      │t│   │   │      │t│   │            │      │t│   │
     │      └─┘   │   │      └─┘   │            │      └─┘   │
     └─────┬──────┘   └─────┬──────┘            └─────┬──────┘
           │ mₐ(t)          │ m_b(t)                  │ mₙ(t)
           ▼                ▼                         ▼
     ┌────────────┐   ┌────────────┐   ~22b       ┌────────────┐
     │            │   │            │    . . . . . │            │
22a  │      ┌──┐  │   │      ┌──┐  │              │      ┌──┐  │
  ─  │      │Rₐ│  │   │      │R_b│ │   22n        │      │Rₙ│  │
     │      └──┘  │   │      └──┘  │    ─         │      └──┘  │
     └─────┬──────┘   └─────┬──────┘            └─────┬──────┘
```

$$stat(\Delta m_a(t), \Delta m_b(t), \dots, \Delta m_n(t))|_t \quad \text{~25}$$

$$stat(\dots)|_t$$

$$F_s(t) = 1 - stat(\dots)|_t \quad \text{~26}$$

## FIG 3

## FIG 4

## FIG 5

**EP 2 478 607 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1478075 B1